Europäisches Patentamt

European Patent Office

Office européen des brevets

(11) Veröffentlichungsnummer: **0 374 786**
**A2**

## (12) EUROPÄISCHE PATENTANMELDUNG

(21) Anmeldenummer: **89123361.1**

(22) Anmeldetag: **18.12.89**

(51) Int. Cl.⁵: **F24F 13/02**

(30) Priorität: **19.12.88 DE 3842718**

(43) Veröffentlichungstag der Anmeldung:
**27.06.90 Patentblatt 90/26**

(84) Benannte Vertragsstaaten:
**AT BE CH DE ES FR GB GR IT LI LU NL SE**

(71) Anmelder: **Schako Metallwarenfabrik Ferdinand Schad KG Zweigniederlassung Kolbingen Steigstrasse 25-27 D-7201 Kolbingen bei Tuttlingen(DE)**

(72) Erfinder: **Müller, Gottfried Haldenstrasse 12 D-7201 Kolbingen(DE)**

(74) Vertreter: **Weiss, Peter Schlachthausstrasse 1 Postfach 466 D-7700 Singen a.H.(DE)**

(54) **Zuluftführungssystem.**

(57) Bei einem Zuluftführungssystem, insbesondere zum Einbringen von Zuluft in industriell genutzte Räume, ist mit zumindest einem Hauptkanal (3) ein etwa senkrecht dazu verlaufendes Stichrohr (4) zum Ausbringen der Zuluft an vorbestimmten Stellen des Raumes (2) verbunden. An das Stichrohr (4) schließt ein Querlüftungsrohr (5) an, welches mit mindestens einer Düse (6) besetzt ist.

Fig.1

EP 0 374 786 A2

## Zuluftführungssystem

Die Erfindung betrifft ein Zuluftführungssystem, insbesondere zum Einbringen von Zuluft in industriell genutzte Räume.

Industriell genutzte Räume und hier vor allem Fabrikhallen weisen heute bedingt durch große Maschinen eine größere Höhe auf als früher. Ferner erzeugen diese Maschine heutzutage bei Gebrauch wesentlich mehr Wärme, was teilweise vom Bedienungspersonal her als unangenehm empfunden wird.

Um dieses Arbeitsklima zu verbessern, ist es notwendig, Zuluft in den entsprechend industriell genutzten Raum einzubringen. Bekanntermaßen geschieht das Einbringen der Zuluft über entsprechende Lüftungssysteme im Deckenbereich einer Fabrikhalle.

Dies bedeutet aber, daß Zuluft in den gesamten Innenraum der Fabrikhalle eingeführt und dort verteilt wird, obwohl die Zuluft nur an bestimmten Orten, meist nahe von Maschinen, gebraucht wird. Soll hier deshalb eine optimale Zuluftzugabe erfolgen, so muß eine wesentlich größere Menge an Zuluft eingeführt werden, was wiederum einen erheblichen Energieaufwand bedeutet. Jede Mehrenergie bringt aber wiederum eine höhere Umweltbelastung mit sich.

Der Erfinder hat sich zum Ziel gesetzt, ein System der oben genannten Art zu entwickeln, mittels welchem eine Optimierung der Zuführung von Zuluft unter wesentlicher Einsparung von Energie erfolgt.

Zur Lösung dieser Aufgabe führt, daß mit zumindest einem Hauptkanal ein etwa senkrecht dazu verlaufendes Stichrohr zum Ausbringen der Zuluft an vorbestimmten Stellen des Raumes verbunden ist.

Der Hauptkanal führt somit die Zuluft im Deckenbereich heran. Von dort zweigt dann das Stichrohr an die vorbestimmte Stelle ab, wobei diese vorbestimmte Stelle in der Regel in der Nähe von Maschinen sein dürfte. Auf diese Weise wird Zuluft nur an den Stellen ausgebracht, wo sie auch benötigt wird. Der übrige Teil der Halle bleibt zuluftfrei, wobei eben an diesen übrigen Stellen die Zuluft auch nicht benötigt wird. Damit verbunden ist aber, daß insgesamt eine wesentlich geringere Menge an Zuluft zugeführt werden muß, so daß auch die entsprechend hierfür notwendige Energie minimiert wird.

Ferner bedeutet dies, daß wiederum weniger Abluft abgeführt und beispielsweise gereinigt werden muß. Auch dies führt zu einer Verringerung des Energiebedarfs und zu Kosteneinsparungen. Damit einhergeht selbstverständlich auch eine Verringerung der Umweltbelastungen.

Aus statischen Gründen dürfte es sich in der Regel als besser erweisen, das Stichrohr etwa senkrecht zum Hauptkanal anzuordnen. Allerdings sollen vom Erfindungsgedanken auch entsprechende Winkelbereiche umfaßt sein, da beispielsweise ein um 10° zur Senkrechten verlaufender Winkel des Stichrohres sich sicherlich nicht hinderlich für die Arbeit in der Fabrikhalle auswirkt. Allerdings muß dann die Anflanschung des Stichrohres am Hauptkanal einseitig verstärkt werden, was wiederum einen erhöhten Arbeitsaufwand mit sich bringt.

Bevorzugt soll mit dem Stichrohr ein Querlüftungsrohr verbunden sein, welches mit mindestens einer Düse besetzt ist. Durch dieses Querlüftungsrohr wird quasi ein Düsenregister zur Verfügung gestellt, welches von dem Bediener individuell eingestellt werden kann. Dies gilt vor allem dann, wenn die Düsen bewegbar ausgebildet sind. So ist es beispielsweise möglich, vier oder mehr Düsen miteinander zu koppeln, so daß eine punktuelle Lufteinbringung möglich wird. Wurfweiten und Endgeschwindigkeiten lassen sich anhand von Diagrammen bei verschiedenen Temperaturunterschieden ablesen und darauf auch die Düsen einstellen.

Selbstverständlich ist auch daran gedacht, daß jede Düse starr mit dem Querlüftungsrohr verbunden ist. Hier hat es sich als günstig erwiesen, die Düse in einen Ringkragen einzusetzen, gegen den sie sich unter Zwischenschaltung eines Dichtungsstreifens abstützt. Der Einfachheit halber ist dann der Ringkragen über eine Schraube mit einem Klemmprofil verbunden, welches eine Einschnürung aufweist, durch die ein Anschlag ausgebildet ist, welcher wiederum einem Flansch an der Düse aufsitzt. Hier soll jedoch dem erfinderischen Gedanken keine Grenze gesetzt sein.

So ist es auf einfache Art und Weise möglich, beispielsweise zwischen eine Wärmequelle und einen Maschinenbediener einen entsprechenden Luftschleier zu legen und so das Arbeitsklima wesentlich zu verbessern. Die erwärmte und ggfs. mit Schadstoffen gefüllte Luft steigt üblicherweise sehr schnell zum Dach der Fabrikhalle hoch und kann dort abgesaugt werden. Bemerkenswert ist vor allem die Energieeinsparung und damit die Verringerung der Umweltbelastung.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1 eine schematische Darstellung eines Lüftungssystemes;

Fig. 2 einen vergrößert dargestellten Querschnitt durch ein Querlüftungsrohr.

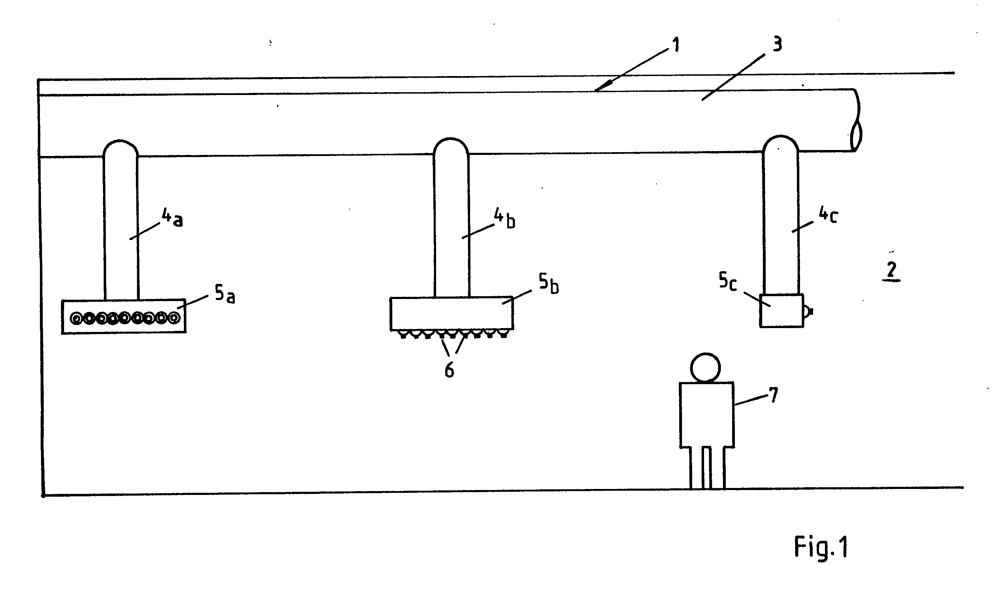

Gemäß Figur 1 weist ein Lüftungskanal 1 für beispielsweise eine nur angedeutete Fabrikhalle 2 einen oder mehrere Hauptkanäle 3 auf. Dieser Hauptkanal 3 verläuft oben an der Decke der Fabrikhalle 2, so daß Arbeiten in der Fabrikhalle 2 selbst nicht behindert werden.

An gewünschten, vorbestimmten Stellen zweigt vom Hauptkanal 3 ein Stichrohr 4a, 4b bzw. 4c etwa senkrecht nach unten ab. An das jeweilige Stichrohr 4 schließt ein Querkanal oder ein Querlüftungsrohr 5 an, in welchem sich spezielle Düsen 6 befinden.

Die entsprechende Zuluft gelangt so über den Hauptkanal 3 durch das Stichrohr 4 und das Querlüftungsrohr 5 aus den Düsen 6, wobei sich anhand entsprechender Diagramme die Wurfweiten dieser Düsen sehr genau feststellen lassen. Diese Düsen können entweder gleichmäßig verteilt auf das Querlüftungsrohr 5 angeordnet oder aber punktuell so eingesetzt werden, daß sie eine Wärmequelle, beispielsweise eine entsprechende, nicht gezeigte Maschine, durch einen Luftschleier von einem Maschinenbediener/-bedienerin 7 trennen.

Auch die Höhe der Anordnung der Querlüftungsrohre 5 hängt einmal von der Höhe der Fabrikhalle 2 und auch von der Anordnung entsprechender Wärmequellen ab.

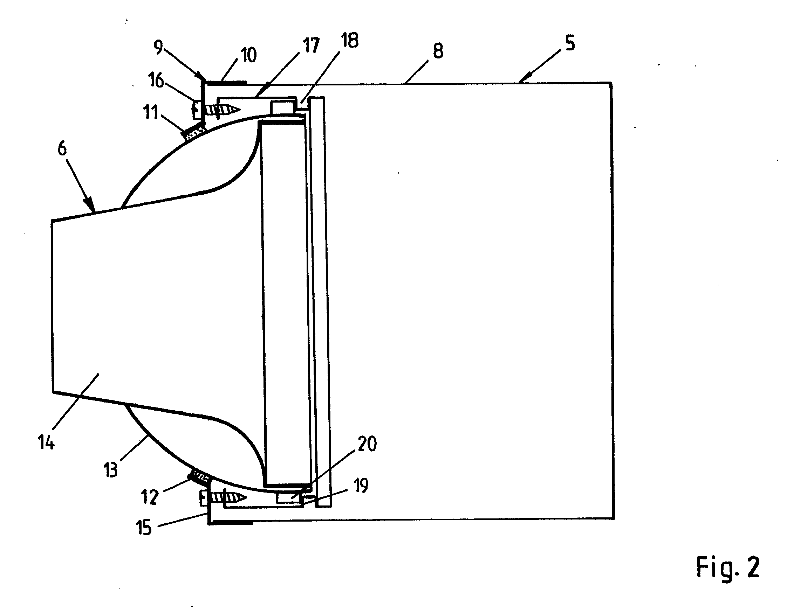

In dem Ausführungsbeispiel nach Figur 2 ist eine Düse 6 starr als Einzeldüse in das Querlüftungsrohr 5 eingesetzt. Der Verbindung mit den Seitenwänden 8 des Querlüftungsrohres 5 dient ein S-förmig ausgebildeter Ringkragen 9, dessen einer Schenkel 10 mit der Seitenwand 8 verbunden ist, während sich der andere Schenkel 11 unter Zwischenschaltung eines Dichtungsstreifens 12 gegen eine Düsenkalotte 13 abstützt. Diese Anordnung bewirkt, daß eine Zuluft nur durch den Düsentrichter 14 nach außen gelangen kann.

Ein Mittelstreifen 15 des Ringkragens 9 wird von einer Schraube 16 durchsetzt, welche andererseits in ein Klemmprofil 17 für die Düse 6 eingreift. Dieses Klemmprofil 17 besitzt eine Einschnürung 18, durch welche ein ringförmiger Anschlag 19 für einen umlaufenden Flansch 20 an der Düsenkalotte 13 ausgebildet ist. Durch ein Anziehen der Schrauben 16 wird über das Klemmprofil 17 bzw. den auf den Flansch einwirkenden Anschlag 19 die gesamte Düse 6 gegen den Dichtungsstreifen 12 gepreßt.

Mittels dieser starren Düsen kann die Zuluft in einem Luftstrahl gleichmäßig dem Raum zugeführt werden. Jedoch ist insbesondere auch an eine punktuelle Lufteinbringung gedacht, wobei zum Beispiel vier Düsen auf einen Punkt blasen. Durch eine flexible Verbindung lassen sich diese vier Einzeldüsen entsprechend den Wünschen des Bedienungspersonals einstellen.

Selbstverständlich können auch mehr oder weniger Düsen so miteinander verbunden sein.

Wie oben bereits erwähnt, lassen sich die Wurfweiten und die Endgeschwindigkeiten der Düsen anhand von Diagrammen bei verschiedenen Temperaturunterschieden ablesen, so daß eine optimale Zuluftführung gewährleistet ist.

Der wesentliche Vorteil dieses gesamten Zuluft-Führungssystemes liegt darin, daß die Zuluft direkt an den Arbeitsplatz gebracht wird, wo sie auch gebraucht wird. Die Abluft wird dann, wie nicht näher gezeigt, oben in der Fabrikhalle entnommen, wobei hier die erwärmte, mit Schadstoffen gefüllte Luft beispielsweise abgesaugt wird.

**Ansprüche**

1. Zuluftführungssystem, insbesondere zum Einbringen von Zuluft in industriell genutzte Räume,
dadurch gekennzeichnet,
daß mit zumindest einem Hauptkanal (3) ein etwa senkrecht dazu verlaufendes Stichrohr (4) zum Ausbringen der Zuluft an vorbestimmten Stellen des Raumes (2) verbunden ist.

2. Zuluftführungssystem nach Anspruch 1, dadurch gekennzeichnet, daß mit dem Stichrohr (4) ein Querlüftungsrohr (5) verbunden ist, welches mit mindestens einer Düse (6) besetzt ist.

3. Zuluftführungssystem nach Anspruch 2, dadurch gekennzeichnet, daß die Düse (6) bewegbar ausgebildet ist.

4. Zuluftführungssystem nach Anspruch 3, dadurch gekennzeichnet, daß mehrere Düsen (6) bezüglich ihrer Bewegung miteinander gekoppelt sind.

5. Zuluftführungssystem nach Anspruch 2, dadurch gekennzeichnet, daß die Düse (6) starr mit dem Querlüftungsrohr (5) verbunden ist.

6. Zuluftführungssystem nach Anspruch 5, dadurch gekennzeichnet, daß die Düse (6) in einen Ringkragen (9) eingesetzt ist.

7. Zuluftführungssystem nach Anspruch 6, dadurch gekennzeichnet, daß sich die Düse (6) unter Zwischenschaltung eines Dichtungsstreifens (12) gegen den Ringkragen (9) abstützt.

8. Zuluftführungssystem nach Anspruch 7, dadurch gekennzeichnet, daß der Ringkragen (9) über eine Schraube (16) mit einem Klemmprofil (17) verbunden ist, welches eine Einschnürung (18) aufweist, durch die ein Anschlag (19) ausgebildet ist, welcher einem Flansch (20) an der Düse (6) aufsitzt.

Fig.1

EP 0 374 786 A2

Fig. 2

EP 0 374 786 A2